# EUROPÄISCHE PATENTSCHRIFT

(11) **EP 0 879 633 B1**
(45) Veröffentlichungstag und Bekanntmachung des Hinweises auf die Patenterteilung: **04.08.2004**
(21) Anmeldenummer: 98107225.9
(22) Anmeldetag: 21.04.1998
(51) Int. Cl.: B01D 53/94, F01N 3/08, F01N 3/10

(54) **Verfahren zur Reinigung eines mageren Abgases und Katalysatorsystem hierfür**
Process for cleaning a lean exhaust gas and catalyst system therefor
Procédé pour purifier un gaz d'échappement maigre et système catalytique correspondant

(30) Priorität: 21.05.1997 DE 19721440
(43) Veröffentlichungstag der Anmeldung: 25.11.1998
(73) Patentinhaber: Umicore AG & Co. KG, 63457 Hanau-Wolfgang (DE)
(72) Erfinder: Strehlau, Wolfgang, Dr., 65538 Grosskrotzenburg (DE); Lox, Egbert, Dr., 63457 Hanau (DE); Kreuzer, Thomas, Dr., 61184 Karben (DE); Höhne, Jürgen, 63457 Hanau (DE)
(74) Vertreter: Stellbrink, Axel

(56) Entgegenhaltungen:
- EP-A- 0 541 271
- EP-A- 0 627 548
- EP-A- 0 664 147
- EP-A- 0 730 900
- EP-A- 0 764 459
- EP-A- 0 778 072
- WO-A-96/17671

## Beschreibung

Die vorliegende Erfindung betrifft ein Verfahren zur Reinigung eines mageren Abgases von Verbrennungskraftmaschinen und ein Katalysatorsystem hierfür.

Die Abgase von Verbrennungskraftmaschinen enthalten als wesentliche Schadstoffe Kohlenmonoxid CO, unverbrannte Kohlenwasserstoffe HC, Stickoxide NOₓ und Partikel. Je nach Typ der Verbrennungskraftmaschine variieren die relativen Schadstoffanteile und der Gehalt an restlichem Sauerstoff. Abhängig vom Sauerstoffgehalt unterscheidet man fettes Abgas, stöchiometrisch zusammengesetztes Abgas und mageres Abgas. Stöchiometrisches Abgas liegt vor, wenn die reduzierenden und oxidierenden Anteile des Abgases eine vollständige Umsetzung der Schadstoffe zu Wasser, Kohlendioxid und Stickstoff ermöglichen. Im fetten Abgas überwiegen die reduzierenden Bestandteile (Kohlenwasserstoffe und Kohlenmonoxid) und im mageren Abgas die oxidierenden Bestandteile (Sauerstoff). Als Maßzahl für die Abgaszusammensetzung wird die Luftzahl λ verwendet. Bei der Luftzahl λ handelt es sich um das auf stöchiometrische Bedingungen normierte Luft/Kraftstoffverhältnis. Das Luft/Kraftstoffverhältnis gibt an, wieviel Kilogramm Luft für die vollständige Verbrennung von einem Kilogramm Treibstoff benötigt werden. Bei üblichen Ottomotor-Kraftstoffen liegt das stöchiometrische Luft/Kraftstoffverhältnis bei einem Wert von 14,6.

Stöchiometrische Bedingungen liegen bei Luftzahlen λ = 1 vor. Werte unter 1 charakterisieren ein fettes Abgas und Werte über 1 ein mageres Abgas.

Bei konventionellen Ottomotoren wird der Sauerstoffgehalt im Abgas mit Hilfe einer sogenannten Lambda-Sonde in der Art geregelt, daß stöchiometrische Bedingungen (λ=1) vorliegen. Dies entspricht einem Sauerstoffgehalt des Abgases von etwa 0,5 Vol-%. Die Lambda-Regelung schließt jedoch periodische Schwankungen der Luftzahl um den stöchiometrischen Wert nicht aus.

Zur Verminderung des Kraftstoffverbrauchs von Ottomotoren wurden sogenannte Magermotoren entwickelt, die ein mageres Abgas mit Luftzahlen von über 1,3 aufweisen. Es gibt Magermotoren mit einem konstant mageren Abgas und Magermotoren, die zum Beispiel während Beschleunigungsphasen in den fetten Abgasbereich wechseln. Auch Dieselmotoren arbeiten während der überwiegenden Betriebsdauer mit einem mageren Abgas, welches 6 bis 10 Vol-% Sauerstoff enthält.

Magermotoren besitzen ein hohes Potential für die Verminderung des Kraftstoffverbrauchs. Dies gilt besonders für direkteinspritzende Magermotoren, die theoretisch eine Verbrauchsminderung von bis zu 25% gegenüber Ottomotoren im stöchiometrischen Betrieb ermöglichen.

Die unterschiedliche Abgaszusammensetzung der verschiedenen Motortypen erfordert speziell entwickelte Abgasreinigungskonzepte. Das Abgas von stöchiometrisch betriebenen Ottomotoren wird mit sogenannten Dreiwegkatalysatoren gereinigt. Diese Katalysatoren sind in der Lage, die drei Schadstoffe Kohlenmonoxid, Kohlenwasserstoffe und Stickoxide bei stöchiometrischen Abgasbedingungen nahezu quantitativ zu Wasser, Kohlendioxid und Stickstoff umzusetzen.

Die Abgasreinigung von Magermotoren und Dieselmotoren bereitet dagegen noch erhebliche Schwierigkeiten. Während die oxidierbaren Bestandteile des mageren Abgases relativ leicht mit Oxidationskatalysatoren umgesetzt werden können, erfordert die Reduktion der Stickoxide spezielle Reduktionskatalysatoren. Diese sogenannten DENOX-Katalysatoren reduzieren die Stickoxide und verwenden dabei die im Abgas enthaltenen Kohlenwasserstoffen und Kohlenmonoxid als Reduktionsmittel. Falls nicht genügend Reduktionsmittel im Abgas vorhanden sind, müssen entsprechende Mengen an Reduktionsmitteln dem Abgas vor dem Kontakt mit dem Reduktionskatalysator zugesetzt werden. Hierbei kann es sich zu Beispiel um unverbrannten Kraftstoff oder um Ammoniak handeln. Unter der Voraussetzung einer ausreichenden Versorgung mit Reduktionsmittel setzen die DENOX-Katalysatoren die Stickoxide kontinuierlich um und werden daher im folgenden auch als Permanent-Reduktionskatalysatoren bezeichnet.

Die Umsetzungsraten eines Katalysators für die einzelnen Schadstoffkomponenten sind stark von der Abgastemperatur abhängig. Mit steigender Abgastemperatur setzt zunächst die Oxidation der Kohlenwasserstoffe und Kohlenmonoxid ein und erreicht innerhalb eines Temperaturintervalls von etwa 150 bis 175°C Oxidationsraten von über 90 %. Bei weiter steigender Temperatur bleibt die Umsetzung der Kohlenwasserstoffe konstant. Die Abgastemperatur, bei der eine Umsetzungsrate von 50 % für den jeweiligen Schadstoff erreicht wird, wird als die Anspringtemperatur für diesen Schadstoff bezeichnet.

Die Umsetzungsrate der Permanent-Reduktionskatalaysatoren für Stickoxide folgt der Umsetzungsrate der Kohlenwasserstoffe. Sie steigt jedoch nicht monoton an, sondern durchläuft bei Temperaturen, bei denen die Oxidation der Kohlenwasserstoffe etwa ihren Maximalwert erreicht hat, ein Maximum und fällt dann mit steigender Temperatur wieder bis auf nahezu Null ab. Optimale Umsetzungsraten für die Stickoxide werden also nur in einem schmalen Temperaturfenster erreicht. Die maximalen Umsetzungsraten für die Stickoxide liegen je nach dem Mengenverhältnis der Kohlenwasserstoffe zu den Stickoxiden im Abgas (HC/NOₓ-Verhältnis) bei etwa 50 bis 70% und damit im Allgemeinen deutlich unter denen für die anderen Schadstoffe im Autoabgas.

Die Umsetzungskurven für die einzelnen Schadstoffe hängen von der Formulierung des jeweiligen Katalysators ab. Das gilt auch für die Stickoxide: Lage und Breite des Temperaturfensters sowie der in diesem Fenster maximal erreichbare Umsetzungsgrad werden durch die Katalysatorformulierung festgelegt. Es sind sogenannte Niedertemperatur-Reduktionskatalysatoren bekannt, die ihre maximale Stickoxidumsetzung bei Temperaturen zwischen 150 und 250°C erreichen. Bei Hochtemperatur-Reduktionskatalysatoren liegt das Maximum der Stickoxidumsetzung oberhalb von 300°C.

Ein typischer Vertreter eines Niedertemperatur-Reduktionskatalysators wird in der nicht vorveröffentlichten DE 196 14 540 offenbart. Er weist ein Temperaturfenster zwischen 150 und 300°C auf.

Die DE 38 41 990 C2 beschreibt einen Hochtemperatur-Reduktionskatalysator für die selektive Reduktion von Stickoxiden in Rauchgasen mit Hilfe von Ammoniak. Der Katalysator besteht im wesentlichen aus einem mit Eisen und/oder Kupfer ausgetauschten Zeolithen vom Mordenittyp und besitzt optimale Umsetzungsraten für die Stickoxide zwischen 350 und 500°C. Die US 5,185,305 beschreibt einen mit Kupfer ausgetauschten Zeolithen ZSM5 für die Reinigung der Abgase eines Magermotors. Ein weiterer Hochtemperatur-Reduktionskatalysator wird in der EP 0 577 879 B1 beschrieben. Es handelt sich um einen Katalysator aus Iridium im Metallzustand oder einem Oxid oder einem Gemisch von diesen auf einem Träger aus Metallcarbiden oder Metallnitriden. Die Menge des Iridiums auf dem Träger beträgt von 0,005 bis 10,0 Gew.-%, bezogen auf die Gesamtmenge des Iridiums und des Trägers. Dieser Katalysator weist seine maximale Stickoxidumsetzung bei etwa 450°C auf.

Zur Verbreiterung des Temperaturfensters für die Stickoxidreduktion werden gemäß der DE 40 32 085 A1 ein Nieder- und ein Hochtemperatur-Reduktionskatalysator hintereinandergeschaltet. Aktivität und Selektivität zweier hintereinandergeschalteter Permanent-Reduktionskatalysatoren sind jedoch unzureichend. Insbesondere ist die Schadstoffumsetzung von Permanent-Reduktionskatalysatoren während kurzzeitiger, stöchiometrischer Abgasbedingungen, verglichen mit konventionellen Dreiwegkatalysatoren, mangelhaft.

Speziell für die Abgasreinigung von Magermotoren wurden daher Stickoxid-Speicherkatalysatoren entwickelt (z.B. EP 0 562 516 A1), die bei Sauerstoffüberschuß (λ>1) die Stickoxide als Nitrate an Alkali- oder Erdalkalielementen speichern und diese bei Anfettung des Abgases (λ<1) zu elementarem Stickstoff reduzieren. Die hierzu notwendigen Anfettungen, bei denen hohe Konzentrationen an Reduktionsmitteln bei gleichzeitig stark abgesenktem Sauerstoffgehalt zur Verfügung gestellt werden, treten entweder in Beschleunigungsphasen auf, in denen hohe Lasten und Drehzahlen gefordert werden, oder müssen im mageren Teillastbetrieb von der Motorelektronik in genau berechneten Zeitabständen in Form kurzer, periodischer Anfettungsspitzen (λ < 1) vorgenommen werden. Letzteres erfordert ein kompliziertes Steuerungskonzept für den Motor und eine sehr präzise Abstimmung des Fahrbetriebs auf den Katalysator. Nachteilig ist weiterhin, daß die periodischen Anfettungsphasen zur Regeneration des Speicherkatalysators zu einem erhöhten Kraftstoffverbrauch führen, die die mit Magermotoren erzielbaren Kraftstoffeinsparungen vermindern.

Gegenüber den Permanent-Reduktionskatalysatoren, die die Stickoxide unter mageren Abgasbedingungen kontinuierlich umsetzen, geschieht dies bei Speicherkatalysatoren nur während der periodischen Anfettungsphasen.

Stickoxid-Speicherkatalysatoren arbeiten im allgemeinen wirkungsvoll in einem Temperaturbereich von 200 bis 500°C. Neben ihrer guten Stickoxid-Speicherleistung im mageren Abgas zeigen Stickoxid-Speicherkatalysatoren auch gute Umsetzungsraten für alle drei Schadstoffarten beim stöchiometrischem Betrieb des Magermotors, die denen von konventionellen Dreiwegkatalysatoren nahe kommen.

Für die zulässigen Schadstoffemissionen von Kraftfahrzeugen wurden bestimmte Grenzwerte festgelegt. Die Emissionen von Kraftfahrzeugen werden während gesetzlich vorgeschriebener Fahrzyklen ermittelt. Von der europäischen Kommission wurde hierfür der MVEG-A-Zyklus festgelegt. Gemäß den derzeit gültigen Grenzwerten darf ein Fahrzeug mit Ottomotor während des MVEG-A-Zyklus nicht mehr als 2,7 g CO/km, nicht mehr als 0,34 g HC/km und nicht mehr als 0,25 g NOₓ/km emittieren. Für Dieselmotoren existieren gesonderte Grenzwerte. 1999 und 2005 sind weitere Verschärfungen der Grenzwerte für Ottomotoren und Dieselmotoren geplant, die in etwa eine Halbierung der jeweils gültigen Grenzwerte beinhalten.

Die bekannten Abgasreinigungsverfahren für magere Abgaszusammensetzungen auf der Basis von Permanent-Reduktionskatalysatoren sind nicht in der Lage, die zukünftigen Abgasgrenzwerte zu erfüllen. Im Falle der Speicherkatalysatoren muß auf Grund der periodischen Anfettungen ein zusätzlicher Kraftstoffverbrauch für die Regeneration ihrer Speicherkapazität in Kauf genommen werden, der das theoretischen Einsparpotential von Magermotoren vermindert. Zudem erfordert ein Reinigungsverfahren unter Verwendung von Speicherkatalysatoren ein kompliziertes Motorsteuerungssystem, welches die Zeitdauer der Anfettungsphasen berechnen und die Anfettungsphasen ausführen muß.

Es ist daher die Aufgabe der vorliegenden Erfindung, ein verbessertes Verfahren zur Reinigung von magerem Abgas anzugeben. Insbesondere sollte das Verfahren auch den durch die periodische Anfettungsphasen bedingten Kraftstoffverbrauch von Speicherkatalysatoren weitgehend vermeiden

Diese Aufgabe wird durch den Gegenstand des Anspruchs 1 gelöst. Das Abgas wird dabei über einen Permanent-Reduktionskatalysator und anschließend über einen Stickoxid-Speicherkatalysator geleitet. Diese Hintereinanderschaltung der beiden Katalysatoren hat den Vorteil, daß der auch bei guten Permanent-Reduktionskatalysatoren stets vorhandene Schlupf von mehr als 30% der Stickoxide von dem nachgeschalteten Stickoxid-Speicherkatalysator abgefangen wird. Da es sich hierbei jedoch nur um einen Teil der gesamten Stickoxidfracht des Abgases handelt, wird die Speicherkapazität des Speicherkatalysators entlastet, so daß er weniger häufig durch Anfettung des Abgases regeneriert werden muß. Dies hat einen verminderten Kraftstoffverbrauch zur Folge. Bei normalem innerstädtischen Fahrbetrieb können die Anfettungsphasen sogar weitgehend entfallen, da hierfür das fettere Abgasgemisch während der immer wiederkehrenden Beschleunigungsphasen völlig ausreicht. Bei konstantem Magerbetrieb im Teillastbereich wird die Anspringtemperatur des Permanent-Reduktionskatalysators überschritten. Er sorgt dann weitgehend allein für die Umsetzung der Stickoxide. Die Frequenz der periodischen Anfettungsphasen für die Regeneration des Speicherkatalysators kann entsprechend vermindert oder es kann auf die Anfettungen sogar ganz verzichtet werden.

Permanent-Reduktionskatalysator und Speicherkatalysator ergänzen sich also in ihren katalytischen Wirkungen. Dies gilt auch für Betriebsphasen des Magermotors mit stöchiometrischen Abgasbedingungen. Unter diesen Bedingungen besitzen Permanent-Reduktionskatalysatoren nur eine mangelhafte Schadstoffumsetzung, während Speicherkatalysatoren noch eine gute Dreiweg-Aktivität bei λ=1 aufweisen.

Die bekannten Speicherkatalysatoren arbeiten optimal in einem Temperaturbereich zwischen 200 und 450°C. Durch Wahl eines Permanent-Reduktionskatalysators mit einem Temperaturfenster für die Stickoxidreduktion zwischen 300 und 600°C kann daher das Temperaturfenster für das Gesamtsystem auf den Bereich zwischen 200 und 600°C ausgedehnt werden. Besonders geeignet hierfür ist die Verwendung eines Iridiumkatalysators als permanenter Reduktionskatalysator für die Stickoxide. Alternativ kann auch ein mit Kupfer ausgetauschter ZSM-5 Zeolithkatalysator eingesetzt werden.

Eine weitere Verbesserung der Schadstoffumsetzung wird dadurch erzielt, daß dem Permanent-Reduktionskatalysator ein klein dimensionierter motornaher Dreiwegkatalysator vorgeschaltet wird, um in der Kaltstartphase des Fahrzeugs Kohlenmonoxid, Kohlenwasserstoffe und Stickoxide umzusetzen. Die Aktivität dieses Katalysators sollte gering sein, da er nach Erreichen der Betriebstemperatur noch genügend Schlupf von Kohlenwasserstoffen und Kohlenmonoxid als Reduktionsmittel für den nachgeschalteten Permanent-Reduktionskatalysator zulassen muß.

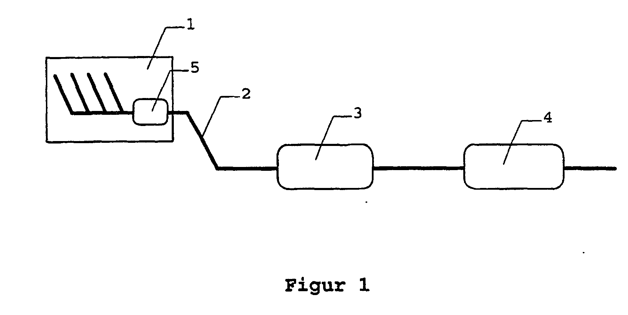

Figur 1 zeigt den schematischen Aufbau eines für das erfindungsgemäße Verfahren geeigneten Abgasreinigungssystems. Der Magermotor 1 ist mit einem Abgassystem 2 versehen, welches zwei Konverter 3 und 4 besitzt. Konverter 3 enthält einen Permanent-Reduktionskatalysator, während Konverter 4 den Stickoxid-Speicherkatalysator enthält.

Beide Katalysatoren können prinzipiell in einem Konvertergehäuse untergebracht werden. Die hier gezeigte Unterbringung in zwei getrennten Konvertergehäusen ermöglicht es jedoch, die Abgastemperatur am Speicherkatalysator während der überwiegenden Dauer des Betriebs in einen für den Speicherkatalysator günstigen Temperaturbereich zu legen. Dies kann in einfacher Weise durch Anpassung der Abgasleitung zwischen den beiden Konvertergehäusen geschehen, da erfahrungsgemäß das Abgas sich beim Durchströmen der Abgasleitung pro Meter Leitungslänge um etwa 50 bis 100°C abkühlt.

Konvertergehäuse 5 ist motornah angeordnet und enthält einen optionalen Vorkatalysator zur Verbesserung der Kaltstarteigenschaften des Abgasreinigungssystems.

## Patentansprüche

1. Verfahren zur Reinigung eines mageren Abgases,
**dadurch gekennzeichnet,**
**daß** das Abgas zunächst über einen motornahen Dreiwegkatalysator (5), dann über einen Permanent-Reduktionskatalysator (3) und anschließend über einen Stickoxid-Speicherkatalysator (4) geleitet wird.

2. Verfahren nach Anspruch 1,
**dadurch gekennzeichnet,**
**daß** als Permanent-Reduktionskatalysator (3) ein iridiumhaltiger Katalysator oder ein kupferhaltiger Zeolithkatalysator verwendet wird.

3. Katalysatorsystem zur Durchführung des Verfahrens nach einem der vorstehenden Ansprüche,
**dadurch gekennzeichnet,**
**daß** es zwei hintereinandergeschalteten Katalysatoren und gegebenenfalls einen vorgeschalteten, motornahen Vorkatalysator (5) enthält, wobei es sich bei den beiden hintereinandergeschalteten Katalysatoren um einen Permanent-Reduktionskatalysator (3) und einen Stickoxid-Speicherkatalysator (4) handelt.

## Claims

1. A method for purifying a lean exhaust gas,
**characterized in that**
the exhaust gas is first conducted over a three-way catalytic converter (5) close to the engine and subsequently over a permanent reduction catalyst (3) and then over a nitrogen oxide storage catalyst (4).

2. The method according to claim 1,
**characterized in that**
a catalyst containing iridium or a zeolite catalyst containing copper is used as permanent reduction catalyst (3).

3. A catalytic system for carrying out the method according to any one of the preceding claims
**characterized in that**
said catalytic system comprises two catalysts arranged in series and, optionally, a pre-catalyst (5) arranged upstream from said two catalysts and close to the engine, wherein said two catalysts connected in series are a permanent reduction catalyst (3) and a nitrogen oxide storage catalyst (4).

## Revendications

1. Procédé pour l'épuration de gaz d'échappement pauvres,
**caractérisé en ce que**
les gaz d'échappement franchissent tout d'abord un catalyseur à trois voies (5) proche du moteur, puis un catalyseur de réduction permanent (3) et, ensuite, un catalyseur accumulateur d'oxydes d'azote (4).

2. Procédé selon la revendication 1,
**caractérisé en ce qu'**
il utilise comme catalyseur de réduction permanent (3) un catalyseur contenant de l'iridium ou un catalyseur à la zéolite contenant du cuivre.

3. Système de catalyseur pour la mise en oeuvre du procédé selon une des revendications précédentes,
**caractérisé en ce qu'**
il renferme deux catalyseurs branchés l'un à la suite de l'autre et éventuellement un pré-catalyseur (5) branché en amont, proche du moteur, les deux catalyseurs branchés l'un à la suite de l'autre étant un catalyseur de réduction permanent (3) et un catalyseur accumulateur d'oxydes d'azote (4).
